# EUROPÄISCHE PATENTANMELDUNG

(11) **EP 0 927 668 A2**
(43) Veröffentlichungstag der Anmeldung: **07.07.1999**
(21) Anmeldenummer: 98119178.6
(22) Anmeldetag: 10.10.1998
(51) Int. Cl.: B60R 22/20

(54) **Sitzgurtbefestigung**

(30) Priorität: 30.12.1997 DE 29722957 U
(71) Anmelder: Fairchild Fasteners Europe - Camloc GmbH, 65779 Kelkheim (DE)
(72) Erfinder: Wolf, Joachim, 60431 Frankfurt am Main (DE)
(74) Vertreter: KEIL & SCHAAFHAUSEN

(57) **Zusammenfassung**

Die Erfindung bezieht sich auf eine Sitzgurtbefestigung für Fahrzeuge und dgl., mit einer Schiene (1) mit Öffnungen (2) für die lösbare Aufnahme eines oberen Gurtbefestigungsstückes in verschiedenen Höhen und mit Befestigungsmitteln zur lösbaren Montage der Schiene (1) an der Karosserie (3) des Fahrzeuges, und ist dadurch gekennzeichnet, daß die Schiene (1) wenigstens zwei im Abstand voneinander angeordnete Befestigungsbolzen (4) trägt, welche jeweils mit ihrem gegenüber dem Bolzenschaft (5) erweiterten Bolzenkopf (6) in eine erweiterte Aussparung (7) eines Arretierungsschlitzes (8) in der Karosserie (3) einsetzbar ist, wobei die übrige gegenüber dem Durchmesser des Bolzenkopfes (6) geringere Breite des Arretierungsschlitzes (8) dazu geeignet ist, die Schiene (1) mit Hilfe der Bolzenschafte (5) von der Einsetzposition in eine Arretierungsposition zu verschieben, in welcher die Bolzenköpfe (6) die Schiene (1) hintergreifen, und daß in der Arretierungsposition der Schiene (1) ein Arretierungsstift (9) in eine Arretierungsöffnung (10) der Karosserie (3) eingreift, um eine Bewegung der Schiene (1) aus ihrer Arretierungsposition zu verhindern.

## Beschreibung

Die Erfindung bezieht sich auf eine Sitzgurtbefestigung für Fahrzeuge und dgl., mit einer Schiene mit Öffnungen für die lösbare Aufnahme eines oberen Gurtbefestigungsstückes in verschiedenen Höhen und mit Befestigungsmitteln zur lösbaren Montage der Schiene an der Karosserie des Fahrzeuges.

Derartige Sitzgurtbefestigungen sind bekannt. Bei ihnen ist die Schiene, welche bei einem Personenkraftwagen Einsatz findet, in der Regel auf der Innenseite des B-Holmes mit der Karosserie verschraubt. Dies bedeutet einen erheblichen Montage- und - bei erforderlichem Austausch - Demontageaufwand sowie aufwendige Nacharbeit bei Verschraubungsfehlern.

Aufgabe der Erfindung ist es, eine Sitzgurtbefestigung dieser Art dahingehend zu verbessern, daß sie - vorzugsweise ohne Werkzeug - leichter und damit schneller montierbar ist, ohne die Sicherheit der Befestigung zu beeinträchtigen. Bei erforderlichem Austausch soll sie möglichst nur vom Fachpersonal demontierbar sein. Außerdem soll der richtige Einbau einfach kontrollierbar sein.

Diese Aufgabe wird bei einer Sitzgurtbefestigung der eingangs genannten Art bspw. dadurch gelöst, daß die Schiene wenigstens zwei im Abstand voneinander angeordnete Befestigungsbolzen trägt, welche jeweils mit ihrem gegenüber dem Bolzenschaft erweiterten Bolzenkopf in eine erweiterte Aussparung eines Arretierungsschlitzes in der Karosserie einsetzbar sind, wobei die übrige gegenüber dem Durchmesser des Bolzenkopfes geringere Breite des Arretierungsschlitzes dazu geeignet ist, die Schiene mit Hilfe der Bolzenschafte von der Einsetzposition in eine Arretierungsposition zu verschieben, in welcher die Bolzenköpfe die Schiene hintergreifen, und daß in der Arretierungsposition der Schiene ein Arretierungsstift in eine Arretierungsöffnung der Karosserie eingreift, um eine Bewegung der Schiene aus ihrer Arretierungsposition zu verhindern.

Mit diesen Merkmalen wird erreicht, daß für die Montage die Schiene lediglich mit ihren Bolzen im wesentlichen senkrecht in die in der Karosserie vorgesehenen Aussparungen eingesetzt und dann längs der Schienenebene in Richtung der wenigstens zwei vorgesehenen Arretierungsschlitze, z.B. in ihrer Längsrichtung, verschoben wird, bis die in die Arretierungsschlitze passenden Bolzenschafte am Ende der Arretierungsschlitze anschlagen, in welcher sich die Schiene in ihrer Arretierungsposition befindet und die Bolzenköpfe die Schiene seitlich der Arretierungsschlitze hintergreifen. In dieser Arretierungsposition der Schiene rastet dann, vorzugsweise selbsttätig der Arretierungsstift in die in der Karosserie an entsprechender Stelle vorgesehene Arretierungsöffnung ein, so daß die Schiene nicht mehr ohne weiteres aus ihrer Arretierungsposition in ihrer Ebene verschoben werden kann. Dabei kann der Arretierungsstift auf erhebliche Scherkräfte beanspruchbar sein, so daß sich die Verankerung des Sicherheitsgurtes auch bei den z.B. bei einem Verkehrsunfall auftretenden Kräfte nicht aus ihrer Verankerung löst. Der Arretierungsstift sollte dabei so angeordnet sein, daß er sich weder ungewollt noch von einem Laien unbedacht aus seiner Verriegelungsposition zurückziehen läßt, um die Sicherheit der Gurtbefestigung nicht zu gefährden.

Die Schiene, welche in einem Kraftfahrzeug in der Regel senkrecht oder nur wenig geneigt an der Karosserie angebracht ist, trägt die Befestigungsbolzen vorzugsweise an ihrem oberen und unteren Ende, so daß der gesamte Zwischenbereich für die Höhenverstellung des Gurtbefestigungsstückes frei bleibt.

Für eine einfache Fertigung bei hoher Festigkeit wird vorgeschlagen, daß die Befestigungsbolzen mit der Schiene verbunden, insbesondere vernietet, verpreßt oder verschweißt sind. Dabei ragen die Befestigungsbolzen so weit aus der Rückseite der Schienenplatte heraus, daß zwischen der Schienenplatte und der Rückseite des Bolzenkopfes wenigstens der Karosserieabschnitt Platz findet, an welchem die Sitzgurtbefestigung erfolgt.

Für die Vereinfachung der Montage stehen die Befestigungsbolzen dabei vorzugsweise senkrecht zur Ebene der Schiene.

Zwischen Schiene und Karosserie kann bei einer bevorzugten Ausgestaltung der Erfindung wenigstens ein Federelement vorgesehen sein. Mit Hilfe eines solchen Federelementes kann ein Klappern der Schiene verhindert werden, wenn aufgrund von Toleranzschwankungen kein einwandfreier Klemmsitz der Schiene an der Karosserie mit Hilfe der Befestigungsbolzen erzielt wird.

Die Federelemente können vorzugsweise als Federscheiben oder Federbleche auf dem Befestigungsbolzen zwischen Schiene und Karosserie aufgenommen sein.

Bei einer weiteren besonderen Ausgestaltung der Erfindung ist der Arretierungsstift an der Schiene, vorzugsweise an deren unteren Ende, angebracht. In dem letztgenannten Fall kann sich die Arretierungsöffnung der Karosserie, in welche der Arretierungsstift eingreifen soll, sobald sich die Schiene in ihrer Arretierungsposition befindet, unmittelbar unterhalb des unteren Arretierungsschlitzes befinden, wenn sich die Arretierungsschlitze von den erweiterten Aussparungen ausgehend zueinander ausgerichtet nach unten erstrecken. Dies erlaubt eine besonders kurze Ausgestaltung der Schiene.

Der Arretierungsstift ist vorzugsweise in Verriegelungsrichtung federelastisch vorgespannt, und zwar derart, daß er, sobald die Schiene in ihre Arretierungsposition gelangt, in die Arretierungsöffnung der Karosserie selbsttätig einrastet. Das Einrasten ist sowohl optisch als auch akustisch feststellbar, so daß die vollständige Montage der Schiene einfach kontrolliert und überwacht werden kann, ohne daß es einer besonderen Betätigung des Arretierungsstiftes bedarf.

Um die einwandfreie Funktion des Arretierungsstiftes zu gewährleisten, ist dieser z. B. in einem an der Schiene angebrachten, vorzugsweise eingerasteten bzw. eingeclipsten, angenieteten, verpreßten oder verschweißten Gehäuse senkrecht zur Schienenebene geführt. Ein Verkanten ist dadurch ausgeschlossen, ebenso wird der Arretierungsstift daran gehindert, seitlich auszuweichen, so daß ein einwandfreies Eintreten in die Arretierungsöffnung gewährleistet ist.

Das Gehäuse kann gleichzeitig dazu dienen, die Vorspannfeder für den Arretierungsstift aufzunehmen, auch kann die Vorspannfeder integriertes Bauteil des Gehäuses sein, indem das Gehäuse entsprechend gestaltet ist.

Der Arretierungsstift hat vorzugsweise eine solche Länge, daß er in Verriegelungsposition mit seinem rückwärtigen Ende entweder in das Gehäuse vollständig eintaucht oder mit diesem fluchtet. In beiden Fällen ist es unmöglich, den Arretierungsstift gegen die Vorspannkraft der Vorspannfeder von Hand aus seiner Verriegelungsposition zurückzuziehen. Zu diesem Zweck hat der Arretierungsstift vorzugsweise an seinem freiliegenden Ende eine Eingriffsöffnung für ein Spezialwerkzeug, mit Hilfe dessen ein Zugkraft auf den Arretierungsstift ausgeübt werden kann, um diesen aus seiner Verriegelungspositon zurückzuziehen, so daß die Schiene zum Zwecke einer gewollten Demontage wieder in ihrer Ebene verschoben werden kann, bis die Bolzenköpfe aus den ihnen zugeordneten gegenüber dem Arretierungsschlitz erweiterten Aussparungen austreten können.

Vorzugsweise ragen die Arretierungsstifte in Offenstellung über eine Anzeigefläche hinaus, welche zum Beispiel von dem Gehäuse gebildet ist. Auf diese Weise ist optisch deutlich erkennbar, ob die Schiene ihre endgültige Arretierungsposition erreicht hat oder nicht.

Für die Vereinfachung der Montage kann ferner das Gehäuse mit Rastvorsprüngen für das Einrasten in Rastöffnungen der Schiene, insbesondere der Seitenschenkel, ausgestattet sein.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1a: eine die Erfindung aufweisende Sitzgurtbefestigung gemäß einem Ausführungsbeispiel in Ansicht,
- Fig. 1b: die Sitzgurtbefestigung nach Fig. 1a in einem Vertikalschnitt entlang der Schnittlinie Ib - Ib in Fig. 1a,
- Fig. 1c: eine stirnseitige Ansicht der bei der Sitzgurtbefestigung nach den Fig. 1a und 1b verwendeten Schiene,
- Fig. 1d: eine vergrößerte Darstellung des Ausschnittes Id in Fig. 1b,
- Fig. 2: eine schematische Darstellung, welche veranschaulicht, wo die erfindungsgemäße Sitzgurtbefestigung bspw. bei einem Personenkraftwagen angeordnet sein kann, nämlich auf der Innenseite der B-Säule,
- Fig. 3a: eine erfindungsgemäße Sitzgurtbefestigung im Bereich des Arretierungsstiftes, teilweise horizontal geschnitten, und
- Fig. 3b: eine Darstellung entsprechend Figur 3a für eine noch andere Ausgestaltung der erfindungsgemäßen Sitzgurtbefestigung.

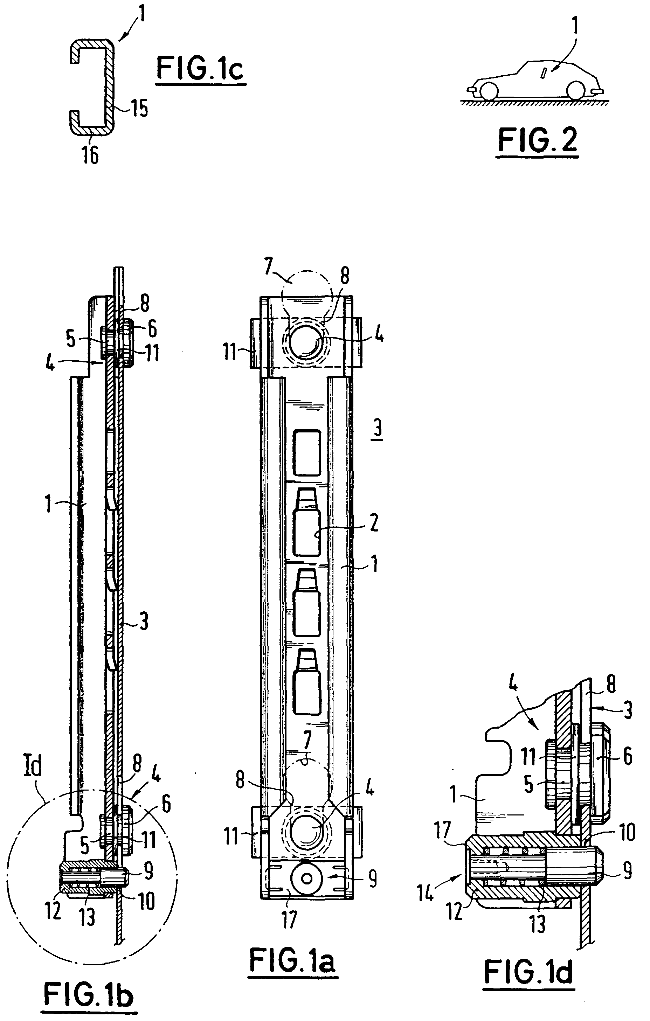

Die in den Fig. 1a - 1d veranschaulichte Sitzgurtbefestigung weist eine Schiene 1 mit Öffnungen 2 für die lösbare Aufnahme eines (nicht dargestellten) oberen Gurtbefestigungsstückes in verschiedenen Höhen auf. Die im Querschnitt im wesentlichen U-förmige und damit stabile Schiene 1 besteht danach aus einer im wesentlichen ebenen Schienenplatte 15, in welcher die Öffnungen 2 vorgesehen sind, sowie zwei im wesentlichen senkrecht von der Schienenplatte 15 abgebogenen Seitenschenkeln 16, welche zur weiteren Erhöhung der Stabilität aufeinander zu nach innen abgewinkelt sind.

Aus Fig. 2 ist erkennbar, wo eine derartige Schiene 1 bspw. in einem Personenkraftwagen angebracht sein kann.

Zu diesem Zweck weist die Schiene 1 Befestigungsmittel zu deren lösbaren Montage an der Karosserie 3 des Fahrzeuges auf. Die Befestigungsmittel sind dadurch gebildet, daß die Schiene 1 zwei im Abstand voneinander angeordnete Befestigungsbolzen 4 trägt, und zwar bei der dargestellten Ausführung je einen am oberen und am unteren Ende der Schiene 1. Die Befestigungsbolzen 4 sind mit ihrem Bolzenschaft 5 in die Schienenplatte 15 derart eingenietet oder auf sonstige Weise befestigt, daß der auf der Rückseite vorgesehene Bolzenkopf 6 einen Abstand von der Rückseite der Schienenplatte 15 hat, in welchem der Befestigungsbereich der Karosserie 3 Platz finden kann. Das Karosseriematerial hat z.B. eine Dicke von etwa 1,5 mm, während die Dicke der Schienenplatte 15 z.B. bei etwa 2,5 mm liegt. In dem Befestigungsbereich der Karosserie 3 sind im Abstand der Befestigungsbolzen 4 Aussparungen 7 vorgesehen, deren Durchmesser das Einsetzen der Bolzenköpfe 6 gestattet. An die Aussparungen 7 schließen sich nach unten gleichgerichtete Arretterungsschlitze 8 von einer Breite an, welche geringer als der Durchmesser der Bolzenköpfe 6 ist, aber geringfügig größer als der Durchmesser des Bolzenschaftes 5. So ist es möglich, die Schiene 1 aus ihrer oberen Einsetzposition nach unten in ihre Arretierungsposition zu verschieben, bis z. B. die Bolzenschafte 5 am jeweiligen Ende des Arretierungsschlitzes 8 ihren Anschlag finden. In dieser Arretierungsposition hintergreifen die Bolzenköpfe 6 die Schienenplatte 15 im Randbereich der Arretierungsschlitze 8.

Wie insbesondere aus Fig. 1d ersichtlich, greift in der Arretierungsposition der Schiene 1 ein Arretierungsstift 9 in eine Arretierungsöffnung 10 des Befestigungsbereiches der Karosserie 3. Dabei ist der Arretierungsstift 9 in einem am unteren Ende der Schiene 1 angebrachten Gehäuse 12 senkrecht geführt und mittels einer ebenfalls in dem Gehäuse 12 aufgenommenen Vorspannfeder 13 in Verriegelungsrichtung federelastisch vorgespannt. Aufgrund dieser Ausgestaltung rastet der Arretierungsstift 9 zwangsläufig in die Arretierungsöffnung 10 ein, sobald die Schiene 1 ihre endgültige Arretierungsposition erreicht hat. Das Einrasten ist sowohl optisch durch Herausragen des hinteren Stiftendes aus einer von dem Gehäuse 12 gebildeten Anzeigefläche 17, als auch akustisch kontrollierbar, was eine sichere Montage gewährleistet. Der Arretierungsstift 9 verhindert in Arretierungsposition, daß die Schiene 1 in ihrer Ebene nach oben verschoben werden kann, was für eine Demontage erforderlich wäre. Um den Arretierungsstift 9 aus seiner Verriegelungsposition zurückziehen zu können, hat er auf seinem rückwärtigen freien Ende eine Eingriffsöffnung 14 für ein Werkzeug, mit Hilfe dessen eine Zugkraft auf den Arretierungsstift 9 ausgeübt werden kann, welche ausreicht, ihn gegen die Kraft der Vorspannfeder 13 zurückzuziehen. Erst wenn dies geschehen ist, kann die Schiene 1 nach oben verschoben werden, bis die Bolzenköpfe 6 wieder in den Bereich der erweiterten Aussparungen 7 gelangen, so daß die Schiene 1 von der Karosserie 3 abgenommen werden kann.

Um ein Klappern der Schiene 1 an der Karosserie 3 auch zu verhindern, auch wenn die Schiene 1 aufgrund von Toleranzschwankungen nicht immer einen Klemmsitz an der Karosserie 3 in ihrer Arretierungsposition hat, sind zwischen der Rückseite der Schiene 1 und dem Befestigungsbereich der Karosserie 3 auf den Befestigungsbolzen 4 aufgenommene Federscheiben oder Federbleche 11 vorgesehen.

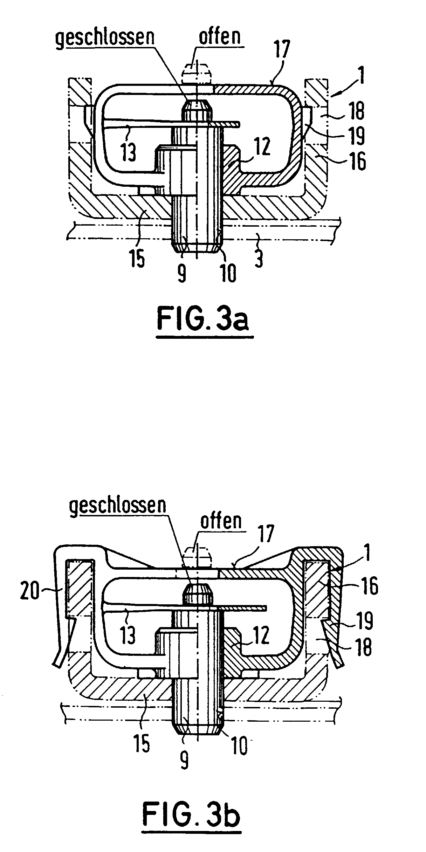

Bei der teilweise horizontal geschnittenen Darstellung von Figur 3a ist die Vorspannfeder 13 integrierter Bestandteil des Gehäuses 12, indem sie zungenartig von einer Seitenwandung nach innen ragt, während an dem frei beweglichen Ende der Vorspannfeder 13 der Stift 9 mit seinem rückwärtigen Ende befestigt ist. Wie strichpunktiert dargestellt, ragt das rückwärtige Ende des Arretierungsstiftes 9 in dessen Offenstellung aus einer sichtbaren, von dem Gehäuse 12 gebildeten Anzeigefläche 17 heraus, während dieses in Arretierungsposition hinter dieser Anzeigefläche 17 verschwindet, so daß sofort erkennbar ist, ob sich der Arretierungsstift 9 in Arretierungsposition befindet oder nicht, d.h. die Schiene 1 richtig montiert ist oder nicht. Das Gehäuse 12 hat an den Außenflächen zweier einander gegenüberliegender Seitenwandungen Rastvorsprünge 19, mit Hilfe welcher das Gehäuse 12 in Rastöffnungen 18 der Seitenschenkel 16 der Schiene 1 festgelegt werden kann. Die Rastvorsprünge 19 haben vorderseitige Auflaufschrägen für die leichtere Montage und vom Gehäuse 12 senkrecht abstehende hintere Rastkanten für das Zusammenwirken mit der Innenfläche der Rastöffnung 18. Für das Einrasten des Gehäuses 12 können die die Rastvorsprünge 19 tragenden Seitenwandungen leicht elastisch nachgeben.

Die in Figur 3b veranschaulichte Ausgestaltung einer erfindungsgemäßen Sitzgurtbefestigung unterscheidet sich von der in Figur 3a dargestellten im Wesentlichen dadurch, daß die Rastvorsprünge 19 nicht unmittelbar an den Seitenwandungen des Gehäuses 12 vorgesehen sind, sondern auf der Innenseite von elastisch nachgiebigen Rastschenkeln 27, mit welchen das Gehäuse 12 die Seitenschenkel 16 der Schiene 1 übergreifen kann. Zur leichteren Montage und zur Verbesserung der Sicherung des Rastsitzes des Gehäuses 12 in der Schiene 1 haben die Rastvorsprünge 19 wiederum vordere Auflaufschrägen sowie rückwärtige Rastkanten.

Bei der erfindungsgemäßen Sitzgurtbefestigung ist sichergestellt, daß erhebliche Kräfte, wie sie bspw. bei einem Unfall auftreten, sicher aufgenommen werden können, ohne daß sich die Schiene aus ihrer Verankerung an der Karosserie 3 löst. Eine Demontage kann auch von Laien nicht ohne weiteres vorgenommen werden. Diese Vorteile werden sämtlich erreicht, obgleich die Montage gegenüber bisherigen Sitzgurtbefestigun gen erheblich vereinfacht ist.

### Bezugszeichenliste

- 1: Schiene
- 2: Öffnungen
- 3: Karosserie
- 4: Befestigungsbolzen
- 5: Bolzenschafte
- 6: Bolzenköpfe
- 7: Aussparungen
- 8: Arretierungsschlitze
- 9: Arretierungsstift
- 10: Arretierungsöffnung
- 11: Federelemente
- 12: Gehäuse
- 13: Vorspannfeder
- 14: Eingriffsöffnung
- 15: Schienenplatte
- 16: Seitenschenkel
- 17: Anzeigefläche
- 18: Rastöffnungen
- 19: Rastvorsprünge
- 20: Rastschenkel

## Patentansprüche

1. Sitzgurtbefestigung für Fahrzeuge und dgl., mit einer Schiene (1) mit Öffnungen (2) für die lösbare Aufnahme eines oberen Gurtbefestigungsstückes in verschiedenen Höhen und mit Befestigungsmitteln zur lösbaren Montage der Schiene (1) an der Karosserie (3) des Fahrzeuges, **dadurch gekennzeichnet**, daß die Schiene (1) wenigstens zwei im Abstand voneinander angeordnete Befestigungsbolzen (4) trägt, welche jeweils mit ihrem gegenüber dem Bolzenschaft (5) erweiterten Bolzenkopf (6) in eine erweiterte Aussparung (7) eines Arretierungsschlitzes (8) in der Karosserie (3) einsetzbar ist, wobei die übrige gegenüber dem Durchmesser des Bolzenkopfes (6) geringere Breite des Arretierungsschlitzes (8) dazu geeignet ist, die Schiene (1) mit Hilfe der Bolzenschafte (5) von der Einsetzposition in eine Arretierungsposition zu verschieben, in welcher die Bolzenköpfe (6) die Schiene (1) hintergreifen, und daß in der Arretierungsposition der Schiene (1) ein Arretierungsstift (9) in eine Arretierungsöffnung (10) der Karosserie (3) eingreift, um eine Bewegung der Schiene (1) aus ihrer Arretierungsposition zu verhindern.

2. Sitzgurtbefestigung nach Anspruch 1, **dadurch gekennzeichnet**, daß die Schiene (1) die Befestigungsbolzen (4) an ihrem oberen und unteren Ende trägt.

3. Sitzgurtbefestigung nach Anspruch 1 oder 2, **dadurch gekennzeichnet**, daß die Befestigungsbolzen (4) mit der Schiene (1) verbunden, insbesondere vernietet, verpreßt oder verschweißt sind.

4. Sitzgurtbefestigung nach einem der Ansprüche 1 bis 3, **dadurch gekennzeichnet**, daß die Befestigungsbolzen (4) senkrecht zur Ebene der Schiene (1) stehen.

5. Sitzgurtbefestigung nach einem der vorhergehenden Ansprüche, **dadurch gekennzeichnet**, daß zwischen Schiene (1) und Karosserie (3) wenigstens ein Federelement (11) vorgesehen ist.

6. Sitzgurtbefestigung nach einem der vorhergehenden Ansprüche, **dadurch gekennzeichnet**, daß die Federelemente (11) als Federscheiben oder Federbleche auf den Befestigungsbolzen (4) aufgenommen sind.

7. Sitzgurtbefestigung nach einem der vorhergehenden Ansprüche, **dadurch gekennzeichnet**, daß der Arretierungsstift (9) an der Schiene (1), vorzugsweise an deren unterem Ende, angebracht ist.

8. Sitzgurtbefestigung nach einem der vorhergehenden Ansprüche, **dadurch gekennzeichnet**, daß der Arretierungsstift (9) in Schließrichtung federelastisch vorgespannt ist derart, daß er, sobald die Schiene (1) in ihre Arretierungsposition gelangt, in die Arretierungsöffnung (10) der Karosserie (3) einrastet.

9. Sitzgurtbefestigung nach einem der vorhergehenden Ansprüche, **dadurch gekennzeichnet**, daß der Arretierungsstift (9) in einem an der Schiene (1) angebrachten, vorzugsweise eingerasteten bzw. eingeclipsten, angenieteten, verpreßten oder verschweißten Gehäuse (12) senkrecht zur Schienenebene geführt ist.

10. Sitzgurtbefestigung nach einem der vorhergehenden Ansprüche, **dadurch gekennzeichnet**, daß die Vorspannfeder (13) für den Arretierungsstift (9) in dem Gehäuse (12) aufgenommen oder integriertes Bestandteil des Gehäuses (12) ist.

11. Sitzgurtbefestigung nach einem der vorhergehenden Ansprüche, **dadurch gekennzeichnet**, daß der Arretierungsstift (9) an seinem freiliegenden Ende eine Eingriffsöffnung (14) für ein Zugwerkzeug aufweist.

12. Sitzgurtbefestigung nach einem der vorhergehenden Ansprüche, **dadurch gekennzeichnet**, daß der Arretierungsstift (9) in Offenstellung über eine Anzeigefläche (17) hinausragt, welche z. B. von dem Gehäuse (12) gebildet wird.

13. Sitzgurtbefestigung nach einem der vorhergehenden Ansprüche, **dadurch gekennzeichnet**, daß das Gehäuse (12) mit Rastvorsprüngen (19) für das Einrasten in Rastöffnungen (18) der Schiene (1), insbesondere deren Seitenschenkel (20), ausgestattet ist.
